# EUROPEAN PATENT APPLICATION

(11) **EP 4 119 341 A1**
(43) Date of publication of application: **18.01.2023**
(21) Application number: 21185261.1
(22) Date of filing: 13.07.2021
(51) Int. Cl.: B32B 7/06, B32B 7/12, B32B 15/085, B32B 15/09, B32B 15/20, B32B 27/10, B32B 27/32, B32B 27/36, B65D 65/40, B65D 75/32, B65D 83/04

(54) **A STRIP PACK SHEET LAMINATE AND A PACKAGE**

(71) Applicant: Danapak Flexibles A/S, 4200 Slagelse (DK)
(72) Inventor: FOGTMANN, Torben, 4200 Slagelse (DK); CHRISTENSEN, Lars, 4200 Slagelse (DK); JOHANSEN, Peter, 4200 Slagelse (DK); MOELLER, Rasmus Buch, 4200 Slagelse (DK)
(74) Representative: AWA Denmark A/S

(57) **Abstract**

A strip pack sheet laminate for being heat-sealed to an opposed sheet laminate for providing a peelable strip pack, the strip pack sheet laminate comprising a polyester film, a barrier layer, and an extrusion coated heat seal layer. 10. A child-resistant package, such as a blister pack or a strip pack, comprising a number of packaged products, a top web sealed to a bottom web, two weakened tear lines dividing the package into four sections, the two tear lines intersecting each other in a peel area, so that tearing along the two tear lines allows access to a peel tab positioned in a corner of at least one of the sections, pockets being provided in sections, wherein at least one of the tear lines, where it is closest to a peripheral circumferential rim of the package, is provided at a distance from the circumferential rim of at least 2 mm, and/or the or each tear line extends less than 99 % of the associated distance between said two points.

## Description

The present disclosure relates to sheet laminates for strip packs, in particular strip pack sheet laminates for being heat-sealed to an opposed sheet laminate for providing a peelable strip pack. The present disclosure also relates to child-resistant packages, such as blister packs and strip packs, which packages can comprise such sheet laminates.

Strip packs are typically formed by a top web and a bottom web, typically identical sheets, foils, or sheet laminates, the top and bottom webs being sealed to each other to form a strip (strip pack) or two-dimensional matrix with one or more rows of pockets, each pocket containing a product, such as a tablet or pill, such as for cosmetic, medicinal, pharmaceutical, nutritional, or other use. The sheet laminates are sealed to each other in the areas where the pockets are not provided. Often, two rows of pockets are provided in one strip pack, each row comprising several, such as two, three, four, five, or more, pockets provided along a longitudinal direction of the strip pack so as to provide differently sized matrixes of sections or pocket sections.

Blister packs are similar packages using a similar top web but where cavities are provided in the bottom web before sealing the top web to the bottom web so that the cavities form the sealed pockets when the top web has been sealed to the bottom web. The bottom web cavities are typically manufactured by cold or heat deformation, i.e. cold or heat pressing. Since it's necessary to provide cavities in the bottom web, the bottom web and the top web are typically of materials different from each other in blister packs but can both be of polypropylene provided in different grammages for each web, the bottom web e.g. being provided in a substantially higher grammage.

Both strip packs and blister packs may be peelable, i.e. openable by peeling, to gain access to the products located in the sealed pockets. Upon opening, the top web is peeled off of the bottom web by the user in order to gain access to a product in an associated pocket. In this case, the top web is typically sealed to the bottom web using an adhesive or glue in order to make the top and bottom webs peelable from each other. Alternatively, the adhesive or glue is included as an internal layer of the top web, and a bottom heat seal layer of the top web is heat-sealed to the bottom web, in which case the top web delaminates in the internal layer in the heat seal area only. This type of blister pack is often applied when the product does not have mechanical properties allowing for the product to be pushed out by puncturing the top web.

In contrast, in puncturable blister packs, the top web is typically heat-sealed to the bottom web using a bottom heat seal layer of the top web. In this case, the product is extracted from the cavity by pushing, e.g. with a finger, on a bottom surface of the cavity of the bottom web against the top web portion positioned above the cavity with enough force to puncture this top web portion so that the product held in the cavity and pocket is pushed out through the punctured opening or rupture of the top web portion.

In the prior art, top webs of puncturable blister packs often comprise a non-annealed aluminium (Al) base foil, typically of about 20 µm thickness. A sealing lacquer is applied as heat seal layer. A print layer for facing the user is sometimes provided on the opposite side of the base foil.

Also known are sheet laminate top webs comprising typically 9 or 12 µm Al foil with a paper sheet adhered by an adhesive to a top surface thereof and a bottom heat seal layer. A print is sometimes provided on the top surface of the paper sheet.

Other known top webs apply plastic films as the base sheet, which may also be provided with a paper layer. Such top webs can be used as peelable top webs.

Each of the bottom and top webs often comprises a barrier layer providing a barrier e.g. against moisture, oxygen, and/or an active pharmaceutical ingredient (API) of the contents of the pockets.

A tablet of each pocket of such known packages may be released from the pocket by a user or patient by either pushing the tablet through one of the top and bottom webs (push-through applications) or by peeling off one web from the other web at the pocket in question to provide access to the pocket (peel applications). Alternatively, in tear-off applications, the package is opened by tearing from a peripheral circumferential rim of the package to reveal the contents of a pocket. Especially in the case of peel applications, the two laminates are peelable from each other, potentially after releasing one or more pocket sections from the strip pack (tear-and-peel applications), the pockets of the pocket sections being unopened after tearing. A pull tab or wing may be provided at corners of each released pocket section.

In tear-and-peel applications, weakened tear lines, typically perforations provided along a linear line, are provided to extend through the top and bottom webs between the pockets. Since the tear lines are provided in the sealed areas of the strip pack, tear lines extending through barrier layers of the strip pack do not compromise the sealing of the pockets of the strip pack. Hereby, the user or patient can tear off one pocket section from the other pocket sections, typically by first bending the strip pack along two, three, or four intersecting linear tear lines and then tearing in sequence along each of the necessary tear lines, each tear being from an accessible rim of the strip pack. This provides release of one or more, typically rectangular or square, pocket section(s) of the strip pack. The user or patient can then pull a peel tab at a corner of the released pocket section to release the top and bottom webs at least partially from each other to gain access to the contents of the pocket in question.

For push-through applications, one or both of the top and bottom webs (for blister packs the top web) must have sufficiently low push-through resistance to allow the user or patient in question to be able to manually or by hand push the pocket contents, such as a tablet, through at least one of the two laminates. In push-through applications, the strip pack will typically continue to exist as a complete strip pack after removal of the contents of each pocket; that is, the emptied pocket sections will still be attached to the non-emptied pocket sections. Each pocket section may include a circumferentially extending, weakened, typically perforated, tear line, each such tear line positioned above or below a pocket in an area of the associated pocket section top or bottom web not sealed to the other laminate. Such tear line is intended to break when the product of a pocket is pushed through the web in which the tear line is provided. This can prevent the seal between the pocket, to which the push-through action provides access, and adjacent pockets from being compromised during the push-through action. Such tear line will typically only extent to a barrier layer of the laminate in question so as to not compromise the barrier of the laminate in question.

Especially in case of contents or products, such as tablets, of the pockets containing active pharmaceutical ingredients or other ingredients that may be harmful to children, it may be desirable to provide a child-resistant package, i.e. making access to the contained products complicated or difficult to children. Such child resistance can be achieved in various ways. For example, child resistance may be achieved by providing a sequence of active manual steps to be performed to gain access to the contents of a pocket of the strip pack, wherein each of such steps may not require more manual force than e.g. a typical senior will be able to provide. Such manual steps may involve first bending along a tear line of the strip pack to weaken the tear line further, then reversing said bending movement, then tearing along the tear line, and then peeling the laminates off from each other to provide access to a pocket of the torn-off pocket section of the strip pack after which the contents of the pocket in question is revealed and can be removed for consumption. Different classifications of child resistance exist in different jurisdictions, each providing different levels of child resistance.

EP 1901973 A2, which is incorporated-by-reference herein, discloses a child-resistant package where the package is opened by tearing along two tear lines from a circumferential rim of the package to release a pocket section. A peel area is provided at the intersection of the two tear lines so that a peel tab is revealed or made accessible when the pocket section is released.

WO 2009/129955 A1 discloses a child-proof top web for blister packs, the top web consisting of a sheet laminate with an Al or plastic base sheet, which on a top surface is adhesive laminated to a cover layer and at a bottom surface comprises a heat seal layer. To provide child resistance, a user gains access to the contained product by first peeling off the cover layer after which the product may be pushed out through the base sheet layer.

On this background, it is an object of the present invention to provide a peelable sheet laminate with suitable properties for being used for a peelable strip pack. Another object is to provide a package, such as a blister pack or a strip pack, the package having improved child-resistance, or a desired level of child resistance being achieved in an alternative manner.

The peelable strip pack laminates according to the present disclosure are for being heat-sealed to an opposed sheet laminate for providing a peelable strip pack. Such sheet laminate can comprise, in sequence:
a polyester film, such as a polyethylene terephthalate film, the polyester film having a first surface for facing the environment or for facing an exterior paper layer, the polyester film further having a second surface, the second surface of the polyester film being opposite the first surface of the polyester film;
a barrier layer, the barrier layer being provided as a metallization of the polyester film and/or as a separate barrier film, such as an Al foil, wherein, when the barrier layer is provided as the barrier film, the separate barrier film has been adhesive laminated to the second surface of the polyester film by means of a first adhesive layer provided between the polyester film and the barrier film so that a first surface of the barrier film faces the first adhesive layer;
an extrusion coating comprising or consisting of a polyethylene or polypropylene heat seal layer with an interior surface for facing the opposed sheet laminate and for facing contents of a pocket of the strip pack, the heat seal layer potentially comprising or consisting, or substantially consisting of, polyethylene or polypropylene modified with polybutylene; and
an optional extrusion coating primer layer, wherein, when the barrier layer is provided as the metallization, the optional extrusion coating primer layer has been applied on the second surface of the polyester film, or wherein, when the barrier layer is provided as the barrier film, the optional extrusion coating primer layer has been applied on the second surface of the barrier film,
wherein, when the barrier layer is provided as the metallization, the extrusion coating has been extrusion coated on the second surface of the polyester film, or wherein, when the barrier layer is the barrier film, the extrusion coating has been extrusion coated on a second surface of the barrier film, or wherein, when the strip pack laminate comprises the optional extrusion coating primer layer, the extrusion coating has been extrusion coated on the optional extrusion coating primer layer.

Such sheet laminates can have advantageous properties, especially for use in peelable strip packs, see further below.

The heat seal layer of the sheet laminates disclosed herein may be a contact layer and/or a welding layer. The term "heat-sealing" as used herein may alternatively be denoted "welding".

The heat seal layer may or may not comprise fillers and/or binders, such as polymer binders, polyurethane binders, nitrocellulosis binders, and/or polyester binders. The heat seal layer may or may not further comprise filler, slip additives, such as wax, and/or softening, colouring, and/or stiffening additives.

The heat seal layer may in some embodiments comprise pores of a gas, such as air. In such embodiments the pores preferably constitute less than 10, 5, 2, or 1 percent by volume of the heat seal layer.

In embodiments where the polyester film comprises a metallization layer, such as a metallized PET (mPET) film, the first or the second surface of the polyester film may be a surface of the metallization or the metallization layer thereof. Thus, the extrusion coating may or may not have been extrusion coated on the metallization. Such metallization can include a metallization primer facing the base layer, followed by a metal layer, followed by a lacquer layer. The metallization may include a metal, such as Al. A thickness of the metal layer can be very small, such as less than 1 um, especially in the nm range. The metallization may be an AlOx og SiOx coating.

The polyester film, such as a polyethylene terephthalate (PET) film or a metallized PET (mPET) film, may be oriented or bi-oriented. A PET of the polyester film may be an amorphous PET (APET) and/or a glycol-modified PET (PETG).

In some embodiments of the strip pack sheet laminates according to the present disclosure, which embodiments include a barrier film, the polyester sheet can be an mPET sheet.

The extrusion coating can be a mono layer or one-layer extrusion coating, i.e. consisting of the heat seal layer. Alternatively, the extrusion coating can be a coextrusion coating comprising the heat seal layer and one or more, such as two, tie layers.

The presence of the optional extrusion coating primer layer may especially be advantageous in embodiments where the extrusion coating consists of the heat seal layer, i.e. where the extrusion coating is not a coextrusion coating. In embodiments where the extrusion coating comprises at least one tie layer, the optional extrusion coating primer layer may also be advantageous. The optional extrusion coating primer layer can have a grammage of 0.1 to 1.0 or 0.16 to 0.64 g/m2. It is noted that extrusion coating primers are usually distributed in low grammages and do not function as "adhesives" as such but rather as primers for the extrusion coating, the melt of which may then be extrusion coated directly on the primer layer, see also further below. The extrusion coating primer may be water-based and/or may be a resin dispersion, such as a water-based modified ethylene copolymer single component resin dispersion, such as MICA M1164.

In some sheet laminates according to the present disclosure, no further layers or materials except the above-mentioned ones, potentially including the extrusion coating primer layer, are provided or positioned between the polyester film, the barrier layer, and the (co-)extrusion coating. In some such sheet laminates, a paper sheet has been adhesive laminated to the first surface of the polyester film by an adhesive layer, and such sheet laminates may comprise no further layers. Alternatively, an ink layer or pattern may be printed on the surface of the paper sheet facing away from the polyester sheet.

A barrier layer provides a high or very high barrier to, for example, oxygen or moisture. Such barrier layers typically comprise a metal, such as Al, such as an Al foil, or AlOx or SiOx.

In this specification, generally when terms such as "thickness" (expressed in µm) and "grammage" (expressed in g/m2) are used, unless otherwise indicated, it is to be understood that the layer, foil, sheet etc. in question has a substantially or essentially uniform thickness or grammage across a planar extent of the layer or sheet laminate according to the stated value. Generally, all layers, foils, sheets etc. of the sheet laminates disclosed herein may be distributed to have substantially uniform thickness or grammage across substantially an entire planar extent of the sheet laminate. The term "grammage" as used in the present disclosure is a measure of the areal density of sheets, films, foils, or layers of a sheet laminate or of the entire sheet laminate. Grammages measured in the examples herein are measured according to DS/EN ISO 536:2020. The term "total grammage" as used herein is intended to mean the accumulated grammage of two or more layers, foils, sheets, etc. For example, two layers each having a grammage of 1 g/m² have a total grammage of 2 g/m². The grammages may be wet weight or dry weight grammages and/or may be measured before, during, or after manufacture, especially extrusion coating and/or adhesive lamination according to the methods of manufacture of the sheet laminates according to the present disclosure. In some embodiments, the tie layer or each of the tie layers, where such are present, and/or the heat seal layer is/are each only one single layer, i.e. they comprise no sublayers. Alternatively, the tie layer or each of the tie layers, where such are present, and/or the heat seal layer each comprises two, three, or more sublayers. Other layers may be present in the sheet laminates according to the present disclosure, such layers potentially being coextrusion coated together with the tie layer(s) and the heat seal layer or being present between the layers, films, foils etc. of the sheet laminates of the present disclosure.

A "polyolefin" may be defined as the class of polymers produced from a simple olefin (also called an alkene with the general formula CnH2n) as a monomer. For example, polyethylene (PE) is the polyolefin produced by polymerizing the olefin ethylene. Polypropylene (PP) is another common polyolefin which is made from the olefin propylene. "Polyolefins", as the term is used herein, can comprise other components than polymerized olefins, such as fillers, wax, etc., see also above, and the same is the case for other polymers mentioned herein. The polyolefins used in the sheet laminates according to the present disclosure can comprise or substantially consist of a thermoplastic polyolefin and/or a poly-α-olefin. A degree of crystallinity of such polyolefins may be above 60 %, 70 %, 80 %, or 90 %. Such polyolefins may be, comprise or substantially consist of PE or may alternatively comprise or consist of PP. Such polyolefins, including e.g. PE and/or PP, may be in the form of a homo-polymer or a copolymer of the polyolefin in question.

The polyester film of the sheet laminates according to the present disclosure may provide suitable tear strength to the sheet laminate, such suitable tear strength preventing unintended access to pockets of the strip pack. A grammage or thickness of the polyester film may be varied so as to provide such suitably high tear strength of the sheet laminate itself while also providing a suitably low tear strength for intended tearing along tear lines to provide intended access to pockets of the strip pack. A suitable thickness of the polyester, PET, mPET, and/or oPET/boPET film may be 10 to 70, 10 to 60, 10 to 50, 10 to 40, 15 to 70, 15 to 60, 15 to 50, 15 to 40, 20 to 70, 20 to 60, 20 to 50, 20 to 40, 20 to 30, 22 to 24, or 35 to 37 µm. The polyester, PET, mPET, oPET, and/or boPET film may be any suitable such film. The polyester film may, for example, be a 23 µm or 36 µm PET or mPET and/or oPET or boPET film, such as F-PAP-23-B (one side corona treated) from Flex Films or Sarafil Polyplex TFC (corona treated) 36 µm from TPL.

The interior surface of the heat seal layer can be heat-sealed to an interior surface of a heat seal layer of an opposed identical sheet laminate to provide a strip pack. With proper selection of the characteristics of such two sheet laminates of such a strip pack, a suitable peel strength between the two sheet laminates can be provided so that the two sheet laminates may be peeled off from each other at the intersection of the two associated heat seal layers without delamination within any of the two sheet laminates. On the other hand, it is important that the two sheet laminates do not unintentionally delaminate. As will be explained in more detail in the following, peel strengths striking such a suitable balance may be provided by modifying the PE and/or PP of the heat seal layer with PB. The PE may be a HDPE (High Density PE), an LDPE (Low Density PE), or an MDPE (Medium Density PE). Alternatively, or additionally, the PE may be a PE copolymer or a PE terpolymer. The PE or PP may be any suitable PE or PP, in particular a peel polyolefin, such as a mineral filled polyolefin, i.e. a polyolefin including a filler, such as talc, such as a compound of LDPE, such as 60 to 80 % LDPE. and a filler, such as talc, such as 20 to 40 % filler or talc, such as Borealis CC7209 or Granic G1522, the latter being based on calcium carbonate (CaCO₃). The PP may be any suitable polypropylene, such as a filled PP, such as Borealis WG350C. The PB may be any suitable PB, such as a semicrystalline PB homopolymer or copolymer, such as Lyondellbasell Toppyl polybutylene 1 PB0110M. Before being extruded, the PE or PP may be mixed with the PB to form a dry blend applied to the extruder (the "dry blend approach" or the "PB-1 approach"). The heat seal layer may comprise PE or may consist or substantially consist of PE. The heat seal layer may comprise PP or may consist or substantially consist of PP. The heat seal layer may consist or substantially consist of PE and PB and/or of PP and PB, potentially with an added filler as described elsewhere herein.

A total grammage of the polyester film, the heat seal layer and all layers, sheets, foils, etc. between the heat seal layer and the polyester film can be 60 to 140, 60 to 130, 60 to 120, 60 to 110, 65 to 105, 70 to 100 75 to 95, 75 to 90, or 75 to 85 g/m².

A grammage of the heat seal layer may be from 3 to 30, 4 to 30, 5 to 30, 4 to 30, 4 to 25, 5 to 30, 5 to 25, 5 to 22, 8 to 30, 8 to 25, 8 to 22, 10 to 30, 10 to 25, 10-22, 15 to 25, or 10 to 14 g/m². A suitable or optimal grammage of the heat seal layer, such as in view of machine runability and/or peel properties of the sheet laminates according to the present disclosure, may be dependent on an amount of PB relative to PE and/or PP in the heat seal layer.

A total grammage of the coextrusion coating, i.e. of the heat seal layer and one or more tie layers, see further below, may be above 7, 8, 9, 10, 12, 14, 15, 17, 18, 19, 20. This grammage of the coextrusion coating may be up to 60, 55, 50, 45, 40, 35, 30, 25, or 20 g/m². This grammage may be 10 to 50, 10 to 45, 10 to 40, 15 to 50, 15 to 45, 15 to 40, 18 to 37, 19 to 36, 15 to 25, or 30 to 35 g/m².

A thickness of the barrier layer, such as an Al foil, potentially an annealed Al foil, may be 1 to 50, 1 to 40, 1 to 30, 1 to 25, 1 to 20, 1 to 15, 1 to 10, 5 to 50, 5 to 40, 5 to 30, 5 to 25, 5 to 20, 5 to 15, 5 to 10, 6 to 13, 7 to 11, or 8 to 10 µm. The term "Al foil" as used herein also covers foils of Al alloys with small amounts of other materials. The Al foil can, for example, be Iberfoil Alloy 8079.

The heat seal layer may be heat-sealable to PE and/or PP and/or to another heat seal layer, the other heat seal layer being similar or identical to the heat seal layer according to the sheet laminates of the present disclosure. When heat-sealed to itself or to an identical other heat seal layer, a split peel between the two heat seal layers may occur between the heat seal layers. This may be achieved by ensuring that the peel strength is lowest at the sealing, i.e. the peel strength between all other layers, foils, sheets, etc. is greater than the peel strength between the two heat seal layers.

The first adhesive layer may consist of or comprise solvent-based and/or two-component adhesive, such as a solvent-based polyurethane-based adhesive, potentially comprising a hardener. An example of a suitable adhesive is Loctite Liofol LA 3644-21 MHS, an associated suitable harder being Liofol LA 6055. The first adhesive layer, and also the second adhesive layer mentioned below, may be provided in usual adhesive lamination grammages, such as 1 to 10, 2 to 8, 2 to 6, 2 to 5, or 2 to 4 g/m².

Tear strengths L (longitudinal) and T (transverse) as used herein, including in the examples below, are tear-propagation as determined by standard ASTM D1938-19, provided in unit N (Newtons). Two identical sheet laminates can be expected to provide tear strengths L and T corresponding to substantially twice the tear strengths L and T, respectively, of a single one of the sheet laminates. Selection of an oriented film, such as oPET or boPET film, as the polyester film may provide greater tear strengths.

SIT (Seal Initiation Temperature) as provided for the sheet laminates of the present disclosure is measured in unit °C, determined by applying 500 N pressure on a sealer jaw or sealing jaw having a seal area of 10 cm², the heat seal layer being heat-sealed against a heat seal layer of an identical sheet laminate. The measured value is a minimum value indicated for when the test operator observes a uniform heat seal or weld that provides a peel opening between the two sheet laminates. The test determining the SIT starts at a low temperature and is increased in 10°C intervals until said uniform seal or weld is achieved, e.g. starting at 80, increasing to 90, then 100, then 110°C if said uniform seal or weld is achieved at 110°C. Alternatively, reaching similar results, the tests could start from a higher temperature, e.g. 140°C, where said uniform seal or weld is achieved and then decrease the temperature in 10°C intervals until said uniform seal or weld is no longer achieved, e.g. at 100°C, providing the same SIT of 110°C..

Tear strength L and/or T may be selected to be so high that children and/or adults cannot tear the strip pack by hand and/or so that such materials do not tear elsewhere upon tearing along weakened, such as perforated, tear lines which may extend through the two sheet laminates, i.e. the top and bottom webs, of a strip pack to divide the strip pack into sections, one or more section(s) comprising one pocket with a packaged product enclosed therein. The tear strengths L and T can be selected to be so low that at least adults and/or seniors can tear strip pack by hand along the tear lines provided in the sheet laminates and, thus, in the strip pack. Tear strengths L and/or T of the sheet laminates can be according to the examples disclosed herein. The peel strength of such sheet laminates can be selected to be so high that the heat seal is so strong that the strip pack will not unintentionally peel and can be selected to be so low that it is possible to intentionally initiate peel by pulling a peel tab. Peel strength of the sheet laminates can be selected according to examples disclosed herein. The strip pack sheet laminates and the strip pack can, hereby, be suitable for tear-and-peel applications as described in the introduction.

Another aspect of the present disclosure involves methods of manufacture of the strip pack sheet laminate according to any one of the embodiments disclosed herein. Such method comprises:
providing the polyester film;
providing the barrier layer as the metallization of the polyester film and/or or as the separate barrier film, and, when the barrier layer is provided as the barrier film, adhesive laminating the separate barrier film to the second surface of the polyester film by means of the first adhesive layer;
optionally applying the optional extrusion coating primer layer, the optional extrusion coating primer layer, when the barrier layer is provided as the metallization, being applied on the second surface of the polyester film, or the optional extrusion coating primer layer, when the barrier layer is provided as the barrier film, being applied on the second surface of the barrier film; and
extrusion coating the extrusion coating, when the barrier layer is provided as the metallization, on the second surface of the polyester film, or, when the barrier layer is the barrier film, on a second surface of the barrier film, or, when the optional extrusion coating primer layer has been applied, on the optional extrusion coating primer layer.

Such methods may involve or be combined with any one of the embodiments and options disclosed herein for the sheet laminates, and methods of manufacture thereof, according to the present disclosure.

The manufacturing steps of the methods of manufacture of strip pack sheet laminates of the present disclosure may be carried out in any order. For example, first the barrier layer is adhesive laminated to the polyester film or the metallized polyester sheet is provided, which may provide a base sheet for the subsequent extrusion coating. Thus, the extrusion coating is extrusion coated, such as coextrusion coated, on the barrier layer of the base sheet, potentially after priming the second surface of the barrier layer with an extrusion coating primer. The first surface of the polyester film of the resultant sheet laminate may then be adhesive laminated to a paper sheet, a print potentially being printed on the outer surface of the sheet laminate before or after the described steps.

Another aspect of the present disclosure involves use of a strip pack sheet laminate according to any one of the embodiments disclosed herein, or manufactured according to any one of the methods of manufacture of such sheet laminates, disclosed herein as a strip pack laminate of a strip pack.

In another aspect, the present disclosure relates to a strip pack comprising two sheet laminates, wherein one or both of the sheet laminates is/are a strip pack sheet laminate(s) according to any one of the embodiments disclosed herein or is/are manufactured according to the embodiments of methods disclosed herein, and wherein the interior surface of the heat seal layer of the strip pack sheet laminate has been heat-sealed to the other sheet laminate to provide pockets, each pocket including one or more packaged products, such as one or more tablets, to be accessed by a user or patient.

The present disclosure also involves methods of manufacture of such strip packs, such method comprising heat-sealing the interior surface of the heat seal layer of the strip pack sheet laminate to the other sheet laminate to provide the pockets of the strip pack. Such methods may be carried out on machinery, such as industrial machinery, for manufacture of strip packs. Such machinery may involve dispensing each of the two sheet laminates from associated rolls of sheet laminate, bringing associated interior surfaces and/or seal surfaces of heat seal layers of the two sheet laminates together and heat-sealing these to each other to provide heat seals that enclose or surround pockets provided between the two sheet laminates. Contents, such as tablets, of the pockets may be placed in suitable positions between the two sheet laminates before heat-sealing, such positions corresponding to the positions of the pockets after heat-sealing.

Another aspect of the present disclosure provides a child-resistant package comprising:
a number of packaged products, such as tablets;
a top web sealed to a bottom web to form the package, the package having a peripheral circumferential rim defined by a circumferential rim of at least one of the top web and the bottom web;
two weakened tear lines extending in the top web and/or in the bottom web in sealed areas thereof, the two tear lines dividing the package into four sections, the two tear lines intersecting each other in a peel area, in which peel area the top web and the bottom web are not sealed to each other, so that tearing along the two tear lines allows access to a peel tab positioned in a corner of at least one of the sections; and
at least two pockets provided between the top web and the bottom web, each pocket being provided in one of said four sections and being provided by the top web and the bottom web not being sealed to each other, each pocket being surrounded by areas where the top web is sealed to the bottom web so as to fully encapsulate the products, each pocket encompassing at least one said packaged product;
wherein at least one of the tear lines, where it is closest to the circumferential rim of the package, is provided at a distance from the circumferential rim of the package of at least 2 mm, whereby tearing along said at least one of the tear lines from the circumferential rim of the package is impeded; and/or
wherein at least one of the tear lines extends along a line extending from one point of the circumferential rim of the package to another, associated point of the circumferential rim of the package, and the or each tear line extends less than 99 % of the associated distance between said two associated points.

The terms "packaging", "package", and "pack" are used interchangeable herein.

The distance between the tear line and the circumferential edge of the package can be the minimum distance between the tear line and the circumferential edge.

The distance between the tear line(s) and the circumferential edge of the package can make it more difficult for children to tear open the package from the circumferential rim of the package. Instead, for example, the sequential procedure of steps to open a pocket to gain access to the product contained therein can be as follows:
1. The package is bent along a first tear line so that the bottom web of two sections face the bottom web of the other two sections;
2. the package is torn along the second tear line to provide two torn-off halves of the package, each torn-off half including two sections;
3. one of the package halves resulting from step 2. is torn along a second tear line to reveal a peel tab of one of the two sections of the package half; and
4. the peel tab of one of the released sections of the packet half of step 3. is pulled with a force sufficient to overcome a peel strength, whereby the released section in question is opened to allow access to the pocket and the product therein.

In step 2., the second tear line can be easily torn in the peel area 38 since, here, there is no or only a small distance to the second tear line from the circumferential rim of the package, such as to a first perforation of the second tear line nearest to the circumferential rim of the package. Similarly, after step 2., the first tear line can be easily torn, in step 3., from the side at the peel area.

Such a sequence of steps can provide a high degree of child resistance while providing a high degree of senior-friendliness.

Except for the pocket areas and peel tab areas, the top web may be sealed to the bottom web over an entire area of the top web and/or of the bottom web. In applications such as a strip pack, the cavities may simply be formed by the pocket areas being areas where the top web and the bottom web are not sealed to each other. Alternatively, or additionally, cavities may be formed in the bottom web and/or in the top web, e.g. by cold or hot forming.

Packages comprising four said sections may be provided as a two-dimensional matrix of 2x2 (two-by-two) sections. Some embodiments of packages according to the present disclosure can be modified to include further such sections with or without pockets, potentially with further tear lines extending between them, as also described above so that the sections form a two-dimensional matrix of e.g. 2x4, 2x6, 2x8, 2x10, 4x4, 4x6, 4x8, or 4x10 sections, weakened tear lines potentially extending in the top web and/or in the bottom web in sealed areas between associated two sets of said pockets so that the tear lines divide the package into the sections, further sections potentially similarly comprising pockets, associated tear lines crossing each other in associated peel areas, in which peel areas the top web and the bottom web may not sealed to each other, so that tearing along the tear lines allows access to a peel tab positioned in a corner of relevant sections. Such matrixes, in particular the circumferential rim of the package, may be rectangular or square.

The weakening of the tear line(s) may be achieved in any known way, such as by perforations that extend through the top web and/or the bottom web. In this case, said distance from the circumferential rim of the package of at least 2 mm may be a distance to the first perforation of the tear line in question. Such perforations can extend through an entire thickness or through only some or through some part of layers, sheets, foils, etc. of the sheet laminates. Alternatively, the weakening may be provided by the top web and/or bottom web being thinner or otherwise weakened along the tear lines, which may be achieved before or after sealing the bottom web to the top web by pressing e.g. a heated surface having the shape of the tear line against and exterior surface of the bottom web or of the top web.

One, more or all tear lines may, where the tear line in question is closest to the circumferential rim of the package, be provided at a distance from the circumferential rim of the package of at least 3, 4, 5, 6, 7, 8, 9, 10, 11, 12, 13, 14, 15, 16, 17, 18, 19, 20, 25, or 30 mm and/or less than 35, 20, 25, 22, 20, 19, 18, 17, 16, 15, 14, 13, 12, 11, 10, 9, 8, 7, 6, 5, 4, or 3 mm, such as from 2 to 20, 2 to 10, 2 to 5, 3 to 20, 3 to 10, or 3 to 5 mm. Alternatively, or additionally, one more, or all tear lines each extend(s) along an associated, potentially imaginary, line extending from one point of the circumferential rim of the package to an associated other point of the circumferential rim of the package, and the or each tear line extends less than 99, 98, 96, 95, 94, 93, 92, 91, 90, 89, 88, 87, 86, 85, 84, 83, 82, 81, 80, 75, 70, 65, or 60 % of the associated distance between said two associated points. Additionally, the or each tear line can extend more than 1, 2, 3, 4, 5, 6, 7, 8, 9, 10, 11, 12, 13, 14, 15, 20, 25, 30, or 35 % of the associated distance between said two associated points. Alternatively, or additionally, one or more or all tear lines of the package each extends along an associated, potentially linear, line that extends between two points of the circumferential rim of the package, the or each tear line thereby having two ends, each end of the or each tear line being positioned said distance of at least 2 mm from the associated point(s) of the circumferential rim of the package. The lines along which two, more, or all tear lines extend may not be coinciding, and/or two or more of these lines may extend in parallel.

The strip packs according to the present disclosure, in particular one or more sections thereof, may comprise one or more further weakened lines for push-trough application, denoted herein as "push-through lines". Each such push-trough line may be round and may be weakened, such as explained for the tear lines above, each such push-trough line being positioned above or below a pocket in an area where the associated section's bottom web part is not sealed to the other laminate. Such push-trough line may be intended to break when the product of a pocket is pushed through the top web or bottom web in which the push-trough line is provided. This can prevent the seal between the pocket, to which the push-through action provides access, and adjacent pockets from being compromised during the push-through action. Such push-trough line will typically only extent to a barrier layer of the laminate, typically through a layer providing tear resistance, such as the polyester film of the strip pack sheet laminates of the present disclosure, so as to not compromise the barrier of the laminate in question. Such push-though lines may not be crossing or intersecting the tear line(s) of the strip packs according to the present disclosure.

In an embodiment of the child-resistant packages disclosed herein, at least one said pocket is provided in each of said four sections, each pocket being surrounded by areas where the top web is sealed to the bottom web so as to fully encapsulate the products, each pocket encompassing at least one said packaged product.

In another embodiment of the child-resistant packages disclosed herein, at least one of the tear lines, where it is closest to the circumferential rim of the package, is provided at a distance from the circumferential rim of the package of at least 4 mm.

In another embodiment of the child-resistant packages disclosed herein, each tear line of the package, where each tear line is closest to the circumferential rim of the package, is provided at a distance from the circumferential rim of the package of at least 2 mm.

In another embodiment of the child-resistant packages disclosed herein, the package is a blister pack or a strip pack. Such blister pack or strip pack may be according to any one of the embodiments thereof disclosed herein.

In another embodiment of the child-resistant packages disclosed herein, the package is a strip pack according to any one of the strip packs disclosed herein, the top web and/or the bottom web being a peelable strip pack sheet laminate according to any one of the embodiments disclosed herein and/or manufactured according to according to any one of the embodiments of methods of manufacture disclosed herein.

A challenge when manufacturing such packages may be to provide a suitably low peel strength to allow pulling the peel tab to open the pockets by hand. Experiments has shown that strip pack sheet laminates according to the present disclosure can overcome this challenge, see also the experiments below.

Alternatively, the top web and/or bottom web may be provided as any suitable prior art sheet(s), foil(s), and/or sheet laminate(s).

Embodiments of sheet laminates and child resistant packages according to the present disclosure will be described in the following detailed description with reference to the drawings in which:
Fig. 1 is a schematic sectional side view of an embodiment of a peelable strip pack sheet laminates according to the present disclosure in which the extrusion coating is a mono layer, i.e. consists of only a heat seal layer;
Fig. 2 is a view similar to that of Fig. 1, showing an embodiment modified compared the embodiment of Fig. 1 in which the extrusion coating is a coextrusion coating comprising two layers;
Fig. 3 is a view similar to that of Fig. 1, showing an embodiment modified compared the embodiment of Fig. 1 and comprising a paper sheet;
Fig. 4 schematically illustrates an extrusion coating step of a method of manufacture of the sheet laminates of Figs 1 to 3 according to an embodiment of the methods of manufacture according to the present disclosure;
Fig. 5 shows an embodiment of the packages of the present disclosure in the form of a strip pack;
Fig. 6 shows another embodiment of the packages of the present disclosure in the form of a blister pack;
Fig. 7 shows a plane view that applies to any one of the embodiments of Figs 5 and 6;
Fig. 8 shows a view similar to that of Fig. 7 in which the package of Fig. 7 has been torn in two, Fig. 8 showing one half of the package of Fig. 7; and
Fig. 9 shows a plane view similar to that of Fig. 7 of a modification of the embodiment of Fig. 7.

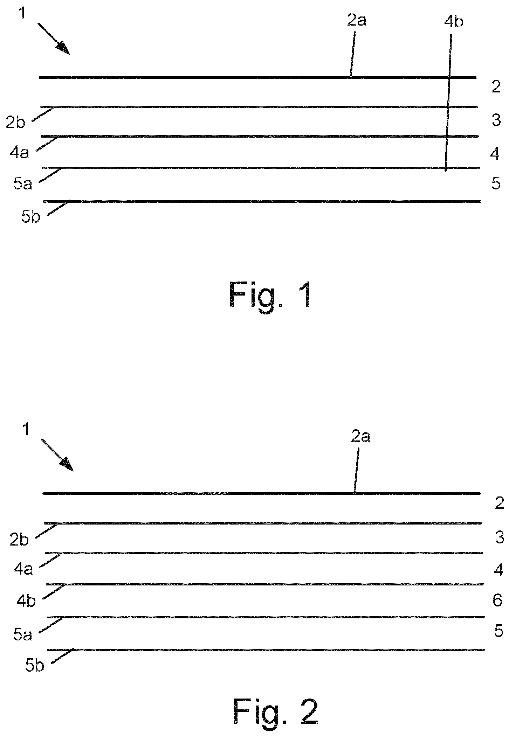

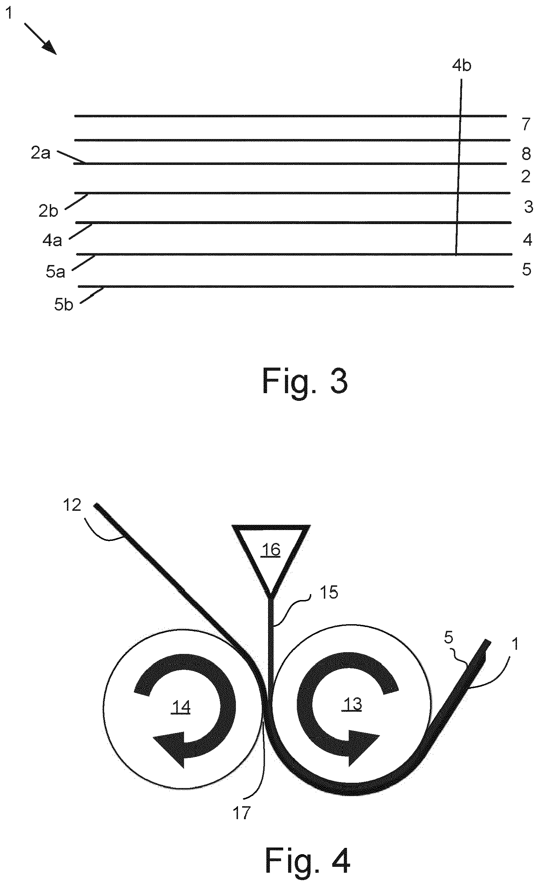

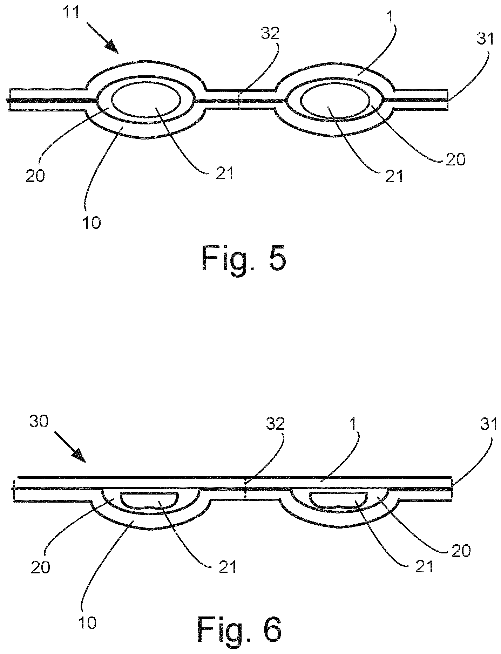

Fig. 1 shows a schematic sectional side view of an embodiment of the peelable strip pack sheet laminates according to the present disclosure for being heat-sealed to an opposed sheet laminate for providing a peelable strip pack shown in Fig. 5. The sheet laminate 1 comprises, in sequence:
a polyester film, in particular a PET film 2, which can be an mPET film, the PET film 2 having a first surface 2a for facing the environment or for facing an exterior paper layer (see Fig. 3), the PET film 2 further having a second surface 2b, the second surface 2b being opposite the first surface 2a;
a barrier layer provided as a separate barrier film, in particular an annealed Al foil 4, wherein the Al foil 4 has been adhesive laminated to the second surface 2b of the PET film 2 by means of a first adhesive layer 3 provided between the PET film 2 and the Al foil 4 so that a first surface 4a of the Al foil 4 faces the first adhesive layer 3;
an extrusion coating consisting of a PE heat seal layer 5 with an interior surface 5b and an interior or second surface 5a, the interior surface 5b being for facing the opposed sheet laminate 10 and for facing contents of a pocket 20 of the strip pack 11, the heat seal layer 5 consisting of a PE modified with PB.

An optional extrusion coating primer layer (not shown) may be applied and/or may have been applied on the second surface 2b of the Al foil.

The extrusion coated heat seal layer 5 has been extrusion coated on a second surface 4b of the Al foil or, if the strip pack laminate 1 comprises the optional extrusion coating primer layer, on the optional extrusion coating primer layer.

The heat seal layer 5, the PET film 2, and/or the optional extrusion coating primer layer may be according to any one the examples thereof as disclosed herein.

The extrusion coating of the embodiment of Fig. 1 is a mono layer extrusion coating, i.e. consisting of the heat seal layer 5. Alternatively, the extrusion coating can be a coextrusion coating comprising the heat seal layer 5 and one or more, such as two, tie layers, see also Fig. 2 and further below.

No further layers or materials except the above-mentioned ones, potentially including the extrusion coating primer layer, are provided or positioned between the PET film 2, the Al layer 4, and the extrusion coating 5. A paper sheet 7 can be adhesive laminated to the first surface 2a of the PET layer 2, and such sheet laminates may comprise no further layers, see Fig. 4 and further below. A not shown ink layer or ink pattern may be printed on the surface of the paper sheet facing away from the PET sheet 2. In other embodiments, other layers are present in the sheet laminate 1, such layers potentially being coextrusion coated together with the heat seal layer 5 or being present between the layers, films, foils etc. of the sheet laminate 1.

The PET film 2 provides tear strength to the sheet laminate 1, the tear strength preventing unintended access to the pockets 20 of the strip pack 11 of Fig. 5.

The interior surface 5b of the heat seal layer 5 can be heat-sealed to an interior surface of a similar or identical heat seal layer of an opposed identical sheet laminate 10 to provide a strip pack 11, see Fig. 5. With proper selection of the characteristics of such two sheet laminates 1, 10 of such a strip pack 11, a suitable peel strength between the two sheet laminates 1, 10 can be provided so that the two sheet laminates 1, 10 can be peeled off from each other at the intersection of the two associated heat seal layers without delamination within any of the two sheet laminates 1, 10. Suitable peel strengths may be provided by modifying the PE or PP of the heat seal layer 5 with a suitable amount of PB, such as 20 weight percentage PB. The PE of the heat seal layer 5 or of one or more tie layers of the extrusion coating, such as tie layer 6 of the embodiment of Fig. 2, may be a HDPE, an LDPE, or an MDPE. The PE may be a PE copolymer or a PE terpolymer. The PE may be a peel PE, such as a mineral filled PE, i.e. a polyolefin including a filler, such as talc, such as a compound of LDPE and talc, such as 70 % LDPE, and a filler, such as talc, such as 30 % filler or talc, such as Borealis CC7209 or Granic G1522, the latter being based on calcium carbonate (CaCO₃). The PB may be any suitable PB, such as a semicrystalline PB homopolymer or copolymer, such as Lyondellbasell Toppyl polybutylene 1 PB0110M. Before being extruded, the PE may be mixed with the PB to form a dry blend applied to the extruder.

A total grammage of the sheet laminates of the figures can be according to the examples disclosed elsewhere herein.

The Al foil can be as exemplified elsewhere herein.

The heat seal layer 5 of the figures is heat-sealable to PE and to an identical, other PE heat seal layer of the other sheet laminate 10 shown in Fig. 5, the other sheet laminate 10 and the other heat seal layer being similar or identical to the heat seal layer 5. When heat-sealed to the other heat seal layer, a split peel between the two heat seal layers will occur between the heat seal layers. This is achieved by ensuring that the peel strength is lowest at the sealing, i.e. the peel strength between all other layers is greater than the peel strength between the two heat seal layers.

The first adhesive layer 3 consists of a solvent-based, two-component, polyurethane-based adhesive comprising a hardener. The adhesive layer materials and grammages thereof can be according to the examples provided elsewhere herein.

Tear strengths L and T of the sheet laminates 1, 10 are selected to be so high that neither children nor adults can tear or can substantially tear the sheet laminate or the strip pack shown in Fig. 5 by hand and so that the sheet laminates 1, 10 do not tear elsewhere upon tearing along tear lines 32, 33 described further below. The tear strengths L and T are selected to be so low that at least adults and/or seniors can tear or can substantially tear the sheet laminate or strip pack by hand along the tear lines 32, 33, potentially after being along the tear lines 32, 33.

Tear strengths L and/or T of the sheet laminates 1, 10 may be selected as disclosed elsewhere herein.

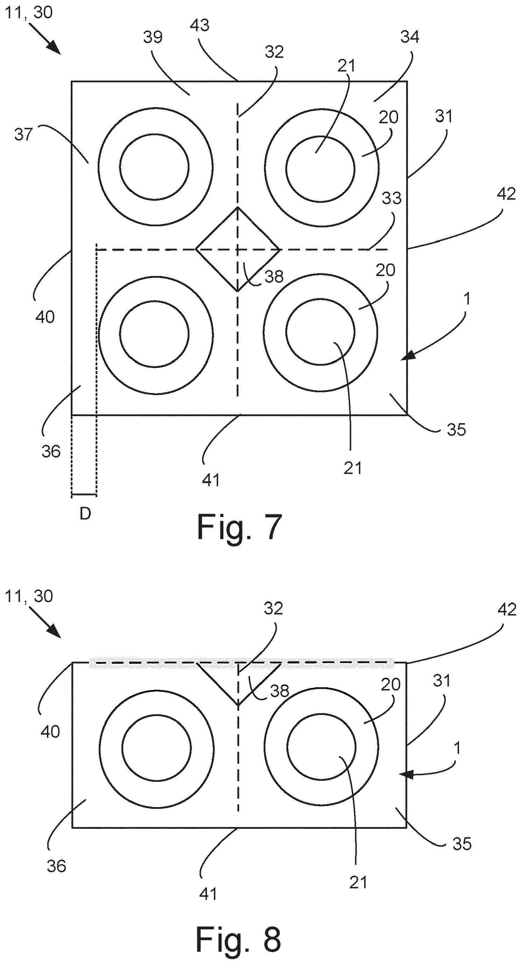

Peel strength of the sheet laminates 1, 10 can be selected to be so high that the heat seal is so strong that the strip pack 11 shown in Fig 5 will not unintentionally peel. The peel strength can be selected to be so low that it is possible to intentionally initiate peel by pulling a peel tab as further described below in connection with Figs 7 to 9. Peel strength of the sheet laminates 1, 10 can be selected according to the examples thereof disclosed elsewhere herein.

The strip pack sheet laminates 1, 10 are for tear-and-peel applications as will be described further below but could also be applied e.g. for tear-off and/or push-through applications.

Fig. 2 shows a modification of the embodiment of Fig. 1, wherein the extrusion coating is modified to be a coextrusion coating instead of a monolayer extrusion coating. All other features are identical to the embodiment of Fig. 1.

The coextrusion coating of the embodiment of Fig. 2 comprises the exterior heat seal layer 5 and a coextrusion coating tie layer 6, the heat seal layer 5 and the tie layer 6 having been coextrusion coated together on the surface 4b of the Al foil 4. A total grammage of the coextrusion coating, i.e. of the heat seal layer 5 and the tie layer 6 and the materials thereof may be as exemplified elsewhere herein.

The coextrusion coating has been coextrusion coated on the second surface 4b of the Al film so that the tie layer 6 connects the heat seal layer 5 to the second surface 4b of the Al foil 4 and so that the tie layer 6 is positioned between the heat seal layer 5 and the Al foil 4.

The heat seal layer 5 and the tie layer 6 may be of or may comprise one or more or all of the same materials, potentially in the same amounts.

The heat seal layer 5 consists of a PE modified with PB. The heat seal layer 5 material may be provided as a dry blend with PB, potentially with a PB master batch and/or the PB and the PE or PP may be provided as a dry blend of the PB and the PE or PP. The weight percentage of polybutylene in the heat seal layer 5 may be as exemplified elsewhere herein.

Fig. 3 shows another modification of the embodiment of Fig. 1, which includes a paper sheet 7 adhesive laminated to the surface 2a of the PET sheet 2 by means of an adhesive layer 8 provided between them. The paper sheet 7 material and grammage can be as exemplified elsewhere herein. The material used of the material for the potential adhesive lamination of the paper sheet to the polyester film may be any one of the above examples of materials suggested for the first adhesive layer. Except for these modifications, the sheet laminate 1 of Fig. 3 is identical to the sheet laminate 1 of Fig. 1.

Another, not shown embodiment involves a combination of the embodiments of Figs 2 and 3, i.e. including the coextrusion coating of Fig. 2 and the paper sheet 8 of Fig. 3.

Experiments show that the sheet laminates 1 according to the above embodiments can be manufactured to have advantageous properties, especially for use in strip packs, see also further below.

In not shown modifications of the embodiments of Figs 1 to 3, the PET sheet 2, the adhesive layer 3, and the Al foil 4 are replaced by an mPET sheet in which any one of the surfaces 2a and 2b can be a surface of the metallization. The characteristics of such an mPET sheet can be in accordance with any one of the examples thereof disclosed herein. Such modifications may otherwise be identical to the embodiments of Figs 1 to 3.

The sheet laminate 1 of Figs 1, 2, or 3, including the above described not shown modifications thereof, which e.g. include an extrusion coating primer and/or an mPET sheet, can be manufactured according to the embodiments of methods of manufacture disclosed in the following.

Such method can comprise the steps of, potentially in sequence:
providing the PET film 2, which may be an mPET film;
providing the barrier layer as the not shown metallization of the mPET film and/or or as the Al foil 4, and, when the Al foil 4 is provided, adhesive laminating the Al film to the second surface 2b of the PET film 2 by means of the first adhesive layer 3;
optionally applying the optional extrusion coating primer layer on the second surface 4b of the Al foil 4 or on the second surface of the mPET film; and
extrusion coating the extrusion coating, which may be a coextrusion coating, on the second surface of the mPET film or on the second surface 4b of the Al foil, or, if the optional extrusion coating primer layer has been applied, on the extrusion coating primer layer.

The manufacturing steps of such method of manufacture may be carried out in any order or sequence, for example in the sequence above. For example, first the Al foil 4 is adhesive laminated to the PET film 2, or the mPET sheet is provided, which provides a base film or base sheet for the extrusion coating, said base sheet being either the mPET film or being a base sheet consisting of the PET film 2, the adhesive layer 3, and the Al foil 4, either of such base sheets potentially also including the adhesive layer 8 and the paper sheet 7. Then, the extrusion coating is extrusion coated or coextrusion coated on the barrier layer, i.e. the metallization or the Al foil 4, of said base sheet, potentially after priming the second surface of the barrier layer with the extrusion coating primer. The first surface of the PET film 2 of the resultant sheet laminate can alternatively subsequently be adhesive laminated to the paper sheet 7. A print can be printed on the outer or exterior surface of the sheet laminate 1, 10 before or after the described steps, potentially on the surface 2a of the PET sheet or on an exterior surface of the paper sheet 7.

The extrusion coating step can be carried out according to an extrusion coating process as illustrated in Fig. 4 to provide the sheet laminate 1 according to the embodiments of Figs 1 to 3. A base film 12 consists of the PET film 2, the adhesive layer 3, and the Al foil 4 or of the mPET film and potentially the primer layer and/or the paper sheet 7. The base film 12is provided on a not shown feed roll of base film 12. In the coating process of the coextrusion coating step, the base film 12 is continuously rolled off from the feed roll to be moved between a cooling roller 13 and a counter roller or pressure roller 14. The cooling roller 13 has a chilled or cooled outer surface onto which a melt 15 of the material eventually forming the extruded/coextruded layer(s) of the extrusion coating/coextrusion coating is applied from an extruder die 16 positioned above and between the base sheet 12 and the cooling roller 13. Before reaching the die 16, the materials for forming the extrusion coating/coextrusion coating are simultaneously and continuously fed into a not shown feed block of an extruder through a not shown associated separate feeder, which comprises a worm for transporting the materials through the feeder and into the feed block.

The extrusion coating process illustrated in Fig. 4 is, thus, a continuous process, the rollers 14, 13 being rotated along the arrows shown in Fig. 4 to continuously pull the base sheet 12 off of the feed roll. Upon contact with the base sheet 12 at or right before a nip 17 between the rollers 13, 14, the melt 15 adheres to the base sheet 12. Subsequently, or at the same time, upon contact with the cooling roller 13, the melt 15 is chilled or quenched to solidify. The result is the sheet laminate 1 shown in either of Figs 1 to 3, the sheet laminate 1 comprising the base sheet 12 coated with the heat seal layer 5 and, potentially, the tie layer 6, which sheet laminate 1 is then rolled up on a collecting roller (not shown). The melt 15 includes melts of the materials of the heat seal layer 5 and, potentially the tie layer 6. In the case of the inclusion of the tie layer 6, the layers 5, 6 are coextruded, i.e. extruded together, through the single die D of the extruder. As described previously, one or more tie layers or other layers can be coextrusion coated together with layers 5, 6. The melt 15 and the base sheet 12 are guided through the nip 17 between the cooling roller 13 and the opposed pressure roller 14 so that the melt 15 faces and contacts the cooling roller 13, and the base sheet 12 faces and contacts the pressure roller 14.

The potential coextrusion of the layers 5, 6, and potential further layers, occurs through the single die 16 of the extruder so that the extrudates merge and weld together into a laminar structure in the melt 10. The layers 5, 6, and potential further layers of the melt 15, are applied as one thermoplastic, polymeric melt between the base sheet 12 and the cooling roller 13 in a continuous process. Upon contact with the cooling roller 13, the melt 15 solidifies, and upon contact with the base sheet 12, the thermoplastic melt 15 is adhered to the base sheet 12 without the use of an adhesive/glue layer between them. The result is the base sheet 12 coated with a thin layer of the coextruded thermoplastic material of layers 5, 6, and the potentially further layers of the coextrusion coating.

As mentioned above, to improve adherence, an extrusion coating primer may optionally be applied to the surface of the base sheet 12 on which the extrusion coating/coextrusion coating is coated before the melt 15 is applied to the surface of the primer.

Chilling or quenching of the melt 15 is carried out by applying the extruded/coextruded layer(s) 5(, 6) onto the cooling roller 13, the heat seal layer 5 facing the cooling roller 13, a pressure being applied in the nip 11 between the two rollers 13, 14.

According to embodiments of uses according to the present disclosure, the sheet laminates 1 of Figs 1 to 3 can be used as a peelable strip pack laminate of a peelable strip pack, such as the strip pack 11 disclosed in the following with reference to Fig. 5.

Fig. 5 shows the strip pack 11 including the two identical sheet laminates 1, 10. The sheet laminate 1 of one of the embodiments described above forms a top web, and the identical sheet laminate 10 forms a bottom web, of the strip pack 11. The interior surface 5a of the heat seal layer 5 of the sheet laminate 1 has been heat-sealed to the corresponding heat seal layer of the sheet laminate 10 to provide pockets 20, each pocket 20 including a tablet 21, to be accessed by a user or patient.

According to an embodiment of the methods of manufacture of the strip packs according to the present disclosure, the interior surface 5a of the heat seal layer 5 (and of the sheet laminate 1) is heat-sealed to the other sheet laminate 11, except in areas where the pockets 20 are provided. This method can be carried out on industrial machinery for manufacture of strip packs as described elsewhere herein. The machinery dispenses each of the two sheet laminates 1, 10 from associated rolls of sheet laminate, bringing the associated interior surfaces or seal surfaces of the heat seal layers together and heat-sealing these to each other to provide heat seals that enclose or surround the pockets 20 provided between the two sheet laminates 1, 10. The tablets 21 are each positioned in one pocket 20 between the two sheet laminates 1, 10 before heat-sealing, such positions corresponding to the positions of the pockets 20 after heat-sealing.

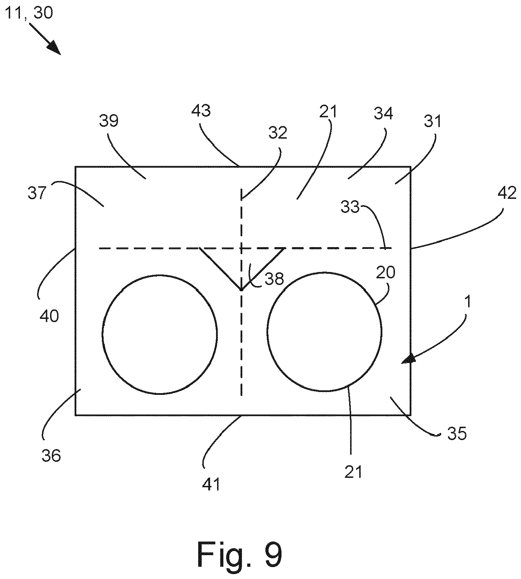

The strip pack 11 shown in Fig. 5 is also an embodiment of the child-resistant packages according to the present disclosure. An alternative embodiment of the child-resistant packages according to the present disclosure is shown in Fig. 6 in a similar view as Fig. 5, the package of Fig. 6 taking the form of a blister pack 30. Figs 7 to 9 show plane or top views of packages that can be either of the strip pack 11 of Fig. 5 and the blister pack 30 of Fig. 6. Figs 7 and 8 show the same package 11, 30, one half of the package 11, 30 shown in Fig. 7 having been torn off in Fig 8. Fig. 9 shows another embodiment of the packages 11, 30. The packages of the figures are all for tear-and-peel applications; however, the package of Fig. 5 could also be for other applications, such as tear-off applications (in that case potentially not comprising any tear lines).

On this background, Figs 5 to 9 will be described simultaneously in the following, where identical references will be used for similar or identical elements.

Similar to the strip pack 11 of Fig. 5, in the blister pack 30 of Fig. 6, tablets 21 are packaged in pockets 20. In both the strip pack 11 and the blister pack 30, a top web 1 is sealed to a bottom web 10 to form the package. In the blister pack 30 of Fig. 6, the top and bottom webs 1, 10 can be materials different from the sheet laminates 1, 10 of Figs 1 to 3 and 5; in particular, the top and bottom webs 1, 10 of the blister pack 30 can be any conventional blister pack top and bottom webs. The top web 1 of the embodiment of Fig. 6 can be of any one of the sheet laminates 1, 10 of Figs 1 to 3 and 5.

Referring to Figs 5 to 9, the packages 11 and 30 of Figs 5 and 6, respectively, each have a square, peripheral, circumferential rim 31 defined by corresponding circumferential rims of the top web 1 and the bottom web 10. In both of the embodiments of Figs 7 (and 8) and Fig. 9, respectively, two weakened tear lines 32, 33 extend in both the top web 1 and in the bottom web 11 in sealed areas thereof. The tear line 32 is also shown in Figs 5 and 6. The two tear lines 32, 33 extend perpendicularly to each other to divide the package 11, 30 into four identical sections 34, 35, 36, 37 forming a 2x2 matrix. The two tear lines 32, 33 intersect each other in a central peel area 38. In the peel area, the top web 1 and the bottom web 10 are not sealed to each other, e.g. in a square area as shown in Fig. 7 or in a triangular area as shown in Fig. 9. a triangular, so that tearing along the two tear lines 32, 33 allows access to peel tabs positioned in a corner of each of sections 34 to 37 in the embodiment of Figs 7 and 8 and of sections 35 and 36 in the embodiment of Fig. 9. Thus, the embodiment of Figs 7 and 8 comprises four triangular peel tabs, each associated with one section 34 to 37, whereas the embodiment of Fig. 9 comprises two triangular peel tabs, each associated with one section 35, 36, respectively.

In the embodiment of Figs 7 and 8, four pockets 20 are provided between the top web 1 and the bottom web 10. In the embodiment of Fig. 9, only two pockets 20 are provided between the top web 1 and the bottom web 10. Each pocket 20 contains one enclosed tablet 21. Each pocket 20 is provided in one of the four sections 34 to 37 and is provided by the top web 1 and the bottom web 10 not being sealed to each other in the pocket area. Each pocket 20 is surrounded by areas 39 where the top web 1 is sealed to the bottom web 10 so as to fully encapsulate the tablets 21, each pocket 20 encompassing one tablet 21.

As can be seen from Figs 7 to 9, each tear line 32, 33, where it is closest to the circumferential rim 31, is provided at each end at a distance D (only shown for the left end of tear line 33) from the circumferential rim 31 of at least 2 mm, whereby tearing along each tear line 32, 33 from the circumferential rim 31 of the package 11, 30 is impeded. As can also be seen, each tear line 32, 33 extends along an imaginary line extending from one point 40, 41 of the circumferential rim 38 to another point 42, 43, respectively, of the circumferential rim 38, each tear line 32, 33 additionally extending less than 99 % of the associated distance between said two points 40, 41; 42, 43, respectively. The distance D is measured from the associated point 40 to 43 to the first perforation of the associated tear line 32, 33.

As also disclosed elsewhere herein, the distance between each tear line 32, 33 and the circumferential edge 31 makes it more difficult for children to tear open the package 11, 30 since the tear lines 32, 33 do not extend to an area of the top web 1 and bottom web 10 provided at the circumferential rim 31.

The sequential procedure of steps to open the pockets 20 of the packages 11, 30 can be as follows:
- 1.: The package 11, 30 is bent along the tear line 33 so that the bottom web 10 of two sections 34,37 face the bottom web 10 of the other two sections 35, 36, as shown in Fig. 8;
- 2.: the package 11, 30 is torn along the tear line 32 to provide two torn-off halves of the package 11, 30, each torn-off half including two sections 34, 35 and 36,37, respectively;
- 3.: the left or right package half is torn along the tear line 33 to reveal the peel tab at peel area 38 of the sections 34, 35 or 36, 37, respectively, of the package 11, 30; and
- 4.: the peel tab of one of the released sections 33 to 37 is pulled with a force sufficient to overcome a peel strength, whereby the released section 33 to 37 in question is opened to allow access to the pocket 20 and the tablet 21 therein.

As shown in Fig. 9, in step 2., the tear line 32 can be easily torn from the top, i.e. in the peel area 38, since there is no or only a small distance to the first perforation of the tear line 32 here. Similarly, after step 2., the tear line can, in step 3., be easily torn from the side of the peel area 38.

Such a sequence of four steps can provide a high degree of child resistance while providing a high degree of senior-friendliness, especially since, each of steps 1. to 4. can be carried out with a small amount of manual force.

Except for in the pocket areas of pockets 20 and in the peel area 38, the top web 1 is sealed to the bottom web 10 over the entire area of the top and bottom webs 1, 10.

In the package 11 of Fig. 5, the pockets 20 are simply formed by the pockets 20 being provided in areas where the top web 1 and the bottom web 10 are not sealed to each other. In the package of Fig. 6, cavities are also formed in the bottom web 10 as shown.

The packages 11, 30 of Figs 5 to 9 each comprises the four sections 34 to 37 to provide a two-dimensional matrix of 2x2 (two-by-two) sections, which matrix, i.e. the circumferential rim 31, is rectangular and square. These embodiments and other embodiments of packages according to the present disclosure can be modified to include further such sections with or without pockets, potentially with further tear lines between them, as also described elsewhere herein. The skilled person will appreciate that such packages can be opened in a manner similar to the sequence of steps 1. to 4. above.

In the embodiments of Figs 5 to 9, the weakening of the tear lines 32, 33 is achieved, as shown, by perforations that extend through the top web 1 and the bottom web 10. Thus, said distance from the circumferential rim 31 of at least 2 mm is a distance to the first perforation or weakening hole of the tear line 32, 33 in question. The weakening of the tear lines 32, 33 can be provided in other ways as disclosed elsewhere herein.

Each section 34 to 37 of the strip pack 11 shown in Fig. 5 can comprise not shown push-through lines for push-trough application as described elsewhere herein. Each such push-trough line can extend along the outer circumference of each pocket 20 as illustrated by a circular line in Figs 7 to 9.

In the embodiment shown in Figs 7 and 8, one pocket 20 is provided in each of the four sections 34 to 37, each pocket 20 being surrounded by areas where the top web 1 is sealed to the bottom web 10 so as to fully encapsulate the tablets 21.

The embodiment shown in Fig. 9 is identical to the embodiment of Figs 7 and 8, except that only the sections 35 and 36 each includes a pocket 20, the tablets 21 and peel tabs of the peel area 38 accordingly only being provided in sections 35 and 36. Opening of the embodiment of Fig. 9 can occur in a manner similar or identical to as described above for the embodiment of Figs 7 and 8.

### Examples

Several examples of strip pack sheet laminates, denoted Laminates 1 to 18, according to the present disclosure were manufactured on a pilot extruder. All Laminates 1 to 18 were according to the embodiment shown in Fig. 2 and were manufactured according to the method as described above, including in connection with Fig. 4.

The PET film 2 was a 23 µm film, specifically the above-mentioned F-PAP-23-B (one side corona treated) from Flex Films.

The material of the first adhesive layer 3 consisted of 2.56 g/m² Loctite Liofol LA 3644-21 MHS and 0.24 g/m² Liofol LA 6055 (hardener).

The AL foil 4 was a 9 µm annealed Al foil.

The material of the heat seal layer 5 consisted of the above-mentioned Borealis CC 7209, in some examples modified with varying weight percentages of PB, the PB being the above-mentioned Lyondellbasell Toppyl polybutylene 1 PB0110M. Before coextrusion, the PE and PB were mixed to form a dry blend that was applied to the extruder as described above.

The material of the coextrusion coating tie layer 6 was the above-mentioned Nucrel 0609HSA.

Grammages of the coextrusion coating, i.e. grammages of the heat seal layer 5 and the tie layer 6 were also varied in Laminates 1 to 18.

The heat seal layer 5 and the tie layer 6 were coextrusion coated together on the second surface of the Al foil 4 as described above. No extrusion coating primer was applied to the surface of the Al foil 4 before extrusion coating.

The varied characteristics of Laminates 1 to 18 appear from Table 1 below. The coextrusion grammage is the calculated total grammage of the coextrusion coating. "w% PB" is the weight percentage of PB.

**Table 1: Variations of Laminates 1 to 18**

| Laminate | Tie layer 6 grammage, g/m² | Heat seal layer 5 grammage, g/m² | Heat seal layer 5, w% PB | Coextrusion grammage, g/m² |
|---|---|---|---|---|
| 1 | 15.0 | 20.0 | 25 | 35 |
| 2 | 10.7 | 14.3 | 25 | 25 |
| 3 | 8.6 | 11.4 | 25 | 20 |
| 4 | 6.4 | 8.6 | 25 | 15 |
| 5 | 4.3 | 5.7 | 25 | 10 |
| 6 | 3.0 | 4.0 | 25 | 7 |
| 7 | 15 | 20.0 | 0 | 35 |
| 8 | 10.7 | 14.3 | 0 | 25 |
| 9 | 8.6 | 11.4 | 0 | 20 |
| 10 | 6.4 | 8.6 | 0 | 15 |
| 11 | 4.3 | 5.7 | 0 | 10 |
| 12 | 3.0 | 4.0 | 0 | 7 |
| 13 | 15 | 20.0 | 14 | 35 |
| 14 | 10.7 | 14.3 | 14 | 25 |
| 15 | 8.6 | 11.4 | 14 | 20 |
| 16 | 6.4 | 8.6 | 14 | 15 |
| 17 | 4.3 | 5.7 | 14 | 10 |
| 18 | 3.0 | 4.0 | 14 | 7 |

Various parameters of Laminates 1 to 18 were measured and appear from Table 2 below. The measured total grammage was the total grammage of all layers of the Laminate in question, measured as disclosed elsewhere herein. The values of Table 2 are mean values of several measurements.

**Table 2: Measured characteristics of Laminates 1 to 18 of Table 1.**

| Laminate | Tear strength L, N | Tear strength T, N | Measured total grammage, g/m² | Peel strength, N | SIT, °C |
|---|---|---|---|---|---|
| 1 | 0.378 | 2.836 | 92.85 | 0.803 | 110 |
| 2 | 0.574 | 2.010 | 86.60 | 0.796 | 110 |
| 3 | 0.328 | 0.732 | 78.10 | 0.866 | 110 |
| 4 | 0.354 | 0.498 | 74.75 | 0.860 | 110 |
| 5 | 0.260 | 0.386 | 70.00 | 1.067 | 110 |
| 6 | 0.256 | 0.290 | 66.75 | 1.313 | 110 |
| 7 | 0.324 | 0.302 | 92.25 | 3.723 | 110 |
| 8 | 0.312 | 0.252 | 82.80 | 3.630 | 110 |
| 9 | 0.294 | 0.240 | 75.90 | 3.530 | 110 |
| 10 | 0.280 | 0.230 | 72.80 | 3.243 | 110 |
| 11 | 0.276 | 0.216 | 69.35 | 3.007 | 110 |
| 12 | - | - | - | - | |
| 13 | 0.400 | 1.328 | 94,2 | 1.233 | 110 |
| 14 | 0.476 | 0.558 | 84.60 | 1.523 | 110 |
| 15 | 0.348 | 0.322 | 79.20 | 1.713 | 110 |
| 16 | 0.290 | 0.320 | 74.60 | 1.783 | 110 |
| 17 | 0.264 | 0.234 | 69.20 | 1.470 | 110 |
| 18 | - | - | - | - | |

In Table 2, "-" indicates that the Laminates 12 and 18 could not be manufactured, which was believed to be due to the low grammages of the coextrusion coatings of Laminates 12 and 18.

Suitable ones of the sheet laminates of the above experiments can be applied as described herein for producing suitable strip packs and/or blister packs.

Further examples and embodiments of the sheet laminates of the present disclosure may be devised by the skilled person, potentially with suitable variations of grammages and/or thicknesses and/or materials and/or material compositions depending on the requirements to the sheet laminate. Also, as described above, a suitable extrusion coating primer may be applied to the AL foil 4 before carrying out the coextrusion coating. Furthermore, the PET film 2, first adhesive layer 3, and Al foil 4 could be replaced with an mPET foil. In such embodiments, deadfold can be expected to differ somewhat but can be expected to be similarly suitable for application as a strip pack sheet laminate. The mPET film can be coated on either side, i.e. on the metallized surface or on the non-metallized surface. Tear strengths T and L can be expected to be similar or somewhat higher compared to the above experiments. Influence on SIT and peel strength can be expected to be minimal.

## Claims

1. A strip pack sheet laminate for being heat-sealed to an opposed sheet laminate for providing a peelable strip pack,
the strip pack sheet laminate comprising, in sequence:
a polyester film, such as a polyethylene terephthalate film, the polyester film having a first surface for facing the environment or for facing an exterior paper layer, the polyester film further having a second surface, the second surface of the polyester film being opposite the first surface of the polyester film;
a barrier layer, the barrier layer being provided as a metallization of the polyester film and/or as a separate barrier film, such as an aluminium foil, wherein, when the barrier layer is provided as the barrier film, the separate barrier film has been adhesive laminated to the second surface of the polyester film by means of a first adhesive layer provided between the polyester film and the barrier film so that a first surface of the barrier film faces the first adhesive layer;
an extrusion coating comprising or consisting of a polyethylene or polypropylene heat seal layer with an interior surface for facing the opposed sheet laminate and for facing contents of a pocket of the strip pack, the heat seal layer potentially comprising or consisting, or substantially consisting, of polyethylene or polypropylene modified with polybutylene; and
an optional extrusion coating primer layer, wherein, when the barrier layer is provided as the metallization, the optional extrusion coating primer layer has been applied on the second surface of the polyester film, or wherein, when the barrier layer is provided as the barrier film, the optional extrusion coating primer layer has been applied on the second surface of the barrier film,
wherein, when the barrier layer is provided as the metallization, the extrusion coating has been extrusion coated on the second surface of the polyester film, or wherein, when the barrier layer is the barrier film, the extrusion coating has been extrusion coated on a second surface of the barrier film, or wherein, when the strip pack laminate comprises the optional extrusion coating primer layer, the extrusion coating has been extrusion coated on the optional extrusion coating primer layer.

2. A strip pack sheet laminate according to claim 1,
wherein the extrusion coating is a coextrusion coating comprising the heat seal layer and one or more coextrusion coating tie layer(s), the heat seal layer and the one or more coextrusion coating tie layer(s) having been coextrusion coated together; and
wherein, when the barrier layer is the metallization, the coextrusion coating has been coextrusion coated on the second surface of the polyester film so that the one or more coextrusion coating tie layers connect(s) the heat seal layer to the second surface of the polyester film so that the one or more coextrusion coating tie layers is/are positioned between the heat seal layer and the polyester film, or wherein, when the barrier layer is the barrier film, the coextrusion coating has been coextrusion coated on a second surface of the barrier film so that the one or more coextrusion coating tie layers connect(s) the heat seal layer to the second surface of the barrier layer so that the one or more coextrusion coating tie layers is/are positioned between the heat seal layer and the barrier film, or wherein, when the strip pack laminate comprises the optional extrusion coating primer layer, the coextrusion coating has been coextrusion coated on the optional extrusion coating primer layer so that the one or more coextrusion coating tie layers connect(s) the heat seal layer to the second surface of the polyester film or to the second surface of the barrier film via the extrusion coating primer layer so that the one or more coextrusion coating tie layers is/are positioned between the heat seal layer and the extrusion coating primer layer.

3. A strip pack laminate according to claim 2, wherein the coextrusion coating comprises one single tie layer.

4. A strip pack laminate according to any one of claims 1 to 3, wherein the heat seal layer comprises or consists, or substantially consists, of a polyethylene modified with polybutylene or of a polypropylene modified with polybutylene.

5. A strip pack sheet laminate according to claim 4, wherein the heat seal layer comprises 70 to 90 weight percentage of polyethylene or polypropylene and 10 to 30 weight percentage of polybutylene.

6. A strip pack sheet laminate according to any one of the previous claims, further comprising a paper sheet, the paper sheet having been adhesive laminated to the first surface of the polyester film by the provision of a second adhesive layer between the paper sheet and the polyester film.

7. A method of manufacture of a strip pack sheet laminate according to any one of the previous claims,
the method comprising:
providing the polyester film;
providing the barrier layer as the metallization of the polyester film and/or or as the separate barrier film, and, when the barrier layer is provided as the barrier film, adhesive laminating the separate barrier film to the second surface of the polyester film by means of the first adhesive layer;
optionally applying the optional extrusion coating primer layer, the optional extrusion coating primer layer, when the barrier layer is provided as the metallization, being applied on the second surface of the polyester film, or the optional extrusion coating primer layer, when the barrier layer is provided as the barrier film, being applied on the second surface of the barrier film; and
extrusion coating the extrusion coating, when the barrier layer is provided as the metallization, on the second surface of the polyester film, or, when the barrier layer is the barrier film, on the second surface of the barrier film, or, when the optional extrusion coating primer layer has been applied, on the optional extrusion coating primer layer.

8. Use of a strip pack sheet laminate according to any one of claims 1 to 6 or manufactured according to claim 7 as a strip pack laminate of a strip pack.

9. A strip pack comprising two sheet laminates, wherein one or each of the sheet laminates is/are a strip pack sheet laminate(s) according to any one of claims 1 to 6 or is/are manufactured according to claim 7, and wherein the interior surface of the heat seal layer of the strip pack sheet laminate has been heat-sealed to the other sheet laminate to provide pockets, each pocket including one or more packaged products, such as one or more tablets, to be accessed by a user or patient.

10. A child-resistant package comprising:
a number of packaged products, such as tablets;
a top web sealed to a bottom web to form the package, the package having a peripheral circumferential rim defined by a circumferential rim of at least one of the top web and the bottom web;
two weakened tear lines extending in the top web and/or in the bottom web in sealed areas thereof, the two tear lines dividing the package into four sections, the two tear lines intersecting each other in a peel area, in which peel area the top web and the bottom web are not sealed to each other, so that tearing along the two tear lines allows access to a peel tab positioned in a corner of at least one of the sections; and
at least two pockets provided between the top web and the bottom web, each pocket being provided in one of said four sections and being provided by the top web and the bottom web not being sealed to each other, each pocket being surrounded by areas where the top web is sealed to the bottom web so as to fully encapsulate the products, each pocket encompassing at least one said packaged product;
wherein at least one of the tear lines, where it is closest to the circumferential rim, is provided at a distance from the circumferential rim of the package of at least 2 mm, whereby tearing along said at least one of the tear lines from the circumferential rim of the package is impeded; and/or
wherein at least one of the tear lines extends along a line extending from one associated point of the circumferential rim of the package to another associated point of the circumferential rim of the package, and the or each tear line extends less than 99 % of the associated distance between said associated two points.

11. A child-resistant package according to claim 10, wherein at least one said pockets is provided in each of said four sections, each pocket being surrounded by areas where the top web is sealed to the bottom web so as to fully encapsulate the products, each pocket encompassing at least one said packaged product.

12. A child-resistant package according to claim 10 or 11, wherein at least one of the tear lines, where it is closest to the circumferential rim of the package, is provided at a distance from the circumferential rim of the package of at least 4 mm.

13. A child-resistant package according to any one of claims 10 to 12, wherein each tear line of the package, where each tear line is closest to the circumferential rim of the package, is provided at a distance from the circumferential rim of the package of at least 2 mm; and/or
wherein each tear line extends along a line extending from one associated point of the circumferential rim of the package to another associated point of the circumferential rim of the package, and each tear line extends less than 99 % of the associated distance between said associated two points.

14. A child-resistant package according to any one of claims 10 to 13, wherein the package is a blister pack or a strip pack.

15. A child-resistant package according to claim 14,
wherein the package is a strip pack according to claim 9; and/or wherein the top web and/or the bottom web are each a peelable strip pack sheet laminate according to any one of claims 1 to 6 and/or manufactured according to claim 7.
